# EUROPEAN PATENT APPLICATION

(11) **EP 1 909 425 A1**
(43) Date of publication of application: **09.04.2008**
(21) Application number: 06020740.4
(22) Date of filing: 02.10.2006
(51) Int. Cl.: H04L 1/18

(54) **Method for the transmission of IP frames**

(71) Applicant: Nokia Siemens Networks GmbH & Co. KG, 81541 München (DE)
(72) Inventor: Klein, Axel, 81737 München (DE); Merz, Peter, 81373 München (DE); Viering, Ingo, Dr., 81539 München (DE)

(57) **Abstract**

The invention relates to a method for the transmission of IP frames between user-equipments and a radio communication system, using HSUPA in scheduled mode with a TTI of 2ms for transmission. HARQ-processes are used for IP transmission and the HARQ-processes are grouped to form specific HARQ settings. Each specific HARQ setting comprises more than one active HARQ-process. The HARQ process allocation is configured by transmission of absolute grant commands. A single absolute grant refers to all HARQ processes of one specific HARQ setting.

## Description

The invention relates to a method for the transmission of IP frames between user-equipments and a radio communication system, using HSUPA in scheduled mode with a TTI of 2ms for transmission.

One of the primary goals of the design of "Enhanced-Dedicated Channel, E-DCH" or of "High Speed Uplink Packet Access, HSUPA" is to keep the so called "Noise Rise over Thermal" or "Rise over Thermal, RoT" or the so called "Received Total Wideband Power, RTWP" constant. This is necessary for stable WCDMA operation - a higher noise rise target leads finally to increased capacity within the radio communication system.

The first step to improve the situation of highly fluctuating noise rise is to use retransmissions with "Hybrid Automatic Repeat-Request, HARQ". Due to coverage reasons, there will be probably more than one transmission of each single VoIP packet expected.

The second step to improve the situation of highly fluctuating noise rise is to give the RNC the possibility to allow just a subset of typically eight HARQ processes for active transmissions of an user-Equipment "UE". In doing so, the RNC is able to stagger some user-equipments in such way, that the noise rise over thermal is more balanced.

However, activity or inactivity of speech results in different subsets of user equipments being simultaneously active. Today, state of the art RNC are definitely too sluggish to follow the alternation of user equipments between speech and silence phases.

In scheduled mode, the NodeB is able to activate or to deactivate individual HARQ processes dynamically by use of so called "absolute grants, AG" or "absolute grant commands". Right now in scheduled mode with a 2ms TTI every user has 8 HARQ processes which can be controlled separately.

The number of required active HARQ processes is given by range considerations. Current cells are planned for edge rates of 64kbps. The VoIP rate of approx. 170kbps (in a single 2ms TTI) exceeds this edge rate by a factor of three, suggesting that three transmissions per packet are probably needed on average to collect sufficient power to catch up with link budget problem.

Two HARQ processes would allow only 2.5 transmissions per VoIP packet, so obviously three HARQ processes will be needed. This would allow up to 3.75 transmissions per packet, while there would be some space still remaining for "fall back" retransmissions.

Obviously, such a setting comes along with a delay of at least 32ms, probably 48ms if an additionally "fall back" retransmission is being considered from time to time.

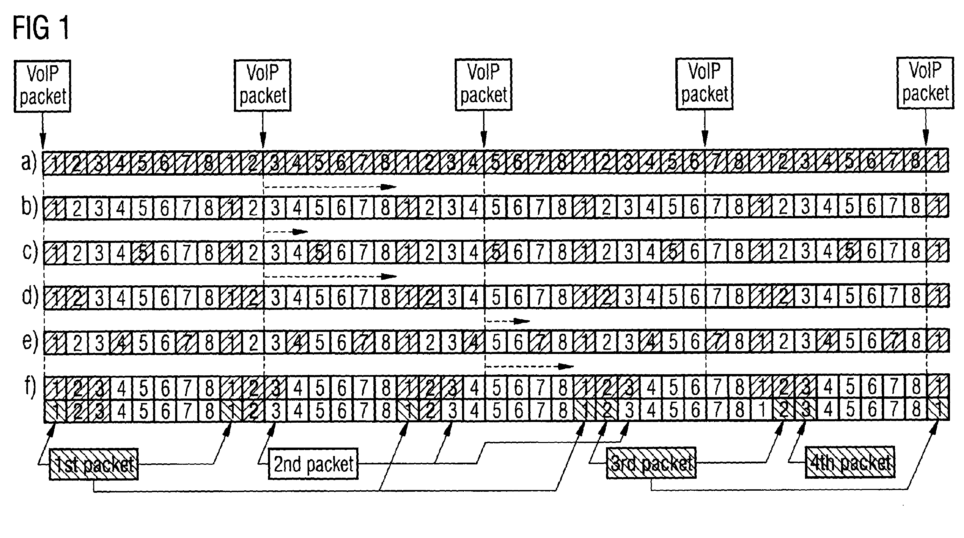

FIG 1 illustrates eight HARQ processes for a 2ms TTI, according to the state of the art.

In Fig 1a all eight HARQ processes are allowed, in Fig 1b only one HARQ process is allowed, in FIG 1c there are two distributed HARQ processes allowed, in FIG 1d there are two consecutive HARQ processes allowed, in FIG 1e there are three distributed HARQ processes allowed, while in FIG 1f there are three consecutive HARQ processes allowed.

A hatched box relates to a HARQ process, where the considered user-equipment is allowed to transmit. The arrival process of IP packets or VoIP packets is shown for every 10^{th} TTI.

A distributed layout performs slightly better from a delay perspective (shown by the arrows), whereas the consecutive layout allows for better coordination since there is less overlap with other users.

For example, within the resulting HARQ setting shown in FIG 1f, the 1^{st} VoIP packet requires four transmissions and the other VoIP packets require three transmissions.

In principle, the HARQ-mechanism is fast enough to follow the change of user equipments between active state and inactive state.

Whenever an user-equipment stops talking, the NodeB would deactivate its HARQ processes. If the user-equipment starts talking again, the NodeB would activate those HARQ processes which are suited best, considering the HARQ configurations of the current user-equipment subset. The NodeB is able to stagger the user equipments dynamically.

However, the involved signaling would probably not be feasible, since - as stated above - a single VoIP user probably needs up to three HARQ processes. Therefore at least three AG are required whenever a user changes from active state into inactive state or vice versa.

For optimal operation, up to nine AG are required whenever an user-equipment becomes inactive, since not only its three HARQ processes have to be deactivated but another user-equipment might need to be reassigned to guarantee a best balancing of the "noise rise over thermal, RoT".

Therefore it is the aim of the present invention, to provide a method for the transmission of IP frames within a radio communication system, using HSUPA with a TTI of 2ms, which allows to activate or to deactivate HARQ processes fast and dynamically.

This aim is solved by the features of claim 1. Preferred embodiments of the invention are described within the succeeding claims.

According to the invention, IP frames between user-equipments and a radio communication system are transmitted, using HSUPA in scheduled mode with a TTI of 2ms for transmission. HARQ-processes are used for IP transmission, wherein the HARQ-processes are grouped to form specific HARQ settings. Each specific HARQ setting comprises more than one active HARQ-process. The HARQ process allocation is configured by transmission of absolute grant commands. A single absolute grant refers to all HARQ processes of one specific HARQ setting.

So, a single absolute grant, which formerly was required for the configuration of a single HARQ process allocation, is no longer dedicated to one single HARQ process, but is now dedicated to all HARQ processes of the specific HARQ setting.

Advantageously the inventive method allows to activate or to deactivate HARQ processes fast and dynamically with feasible signaling effort.

Advantageously the present invention use the scheduled mode efficiently and applicable not only for IP frames but also for VoIP frames of VoIP services.

Advantageously the MAC signaling of "Absolute Grants, AG" is optimized, while the number of absolute grant messages or commands, required for the reconfiguration of the HARQ process allocation, is reduced.

Advantageously the format of absolute grant signaling does not have to be changed at all, just its interpretation by the user equipment.

For instance, according to the inventive method:
- A deactivation message for the first HARQ process in the RNC configuration (or for any other process in the configured subset) is able to deactivate all HARQ-processes.
- An activation message for a specific HARQ process would activate a new subset of HARQ processes, which can be uniquely derived from the originally RNC-configured subset and the offset between the HARQ process, to which the received AG message refers, and the first HARQ process in the configured subset (or some other reference process in the current configuration).
- The new subset shall immediately replace the previous process configuration (so that no further deactivation messages are required).

An activation message will be interpreted as an update of the existing configuration. Especially for reallocation it is possible to restore a balanced noise rise operation, while one user turns to inactive state.

The inventive method provides best possible staggering with significantly reduced signaling overhead.

In a preferred embodiment the user-equipments are assigned to user-groups in a cyclic way, until a best possible balance between the amounts of users per user-group is found. Next each user-group corresponds to one dedicated HARQ setting, while a specific HARQ setting comprises more than one active HARQ process.

In a preferred embodiment a RNC is able to configure a subset of those HARQ processes, thereby prohibiting remaining HARQ processes.

In a preferred embodiment a NodeB is able to activate and deactivate HARQ processes via AG. This would be much quicker than the described configuration by RNC.

In a preferred embodiment, the allocation of the user equipments to dedicated user-groups and the absolute grant signaling relating to one dedicated user-group is also controlled by the NodeB.

In a preferred embodiment, the RNC configures the subsets or groups of HARQ processes. In a further preferred embodiment the NodeB has the opportunity to shift HARQ processes, i.e. to change the assignment of the entire subset with a single absolute grant message.

In a preferred embodiment the HARQ-processes for a user-equipment, which becomes inactive, are deactivated by a single absolute grant.

In this case other user equipments will be reassigned to restore the balance noise rise operation, while this is accomplished by another absolute grant.
So this requires just two absolute grant commands instead of up to nine absolute grants according to the state of the art today.

Whenever a user-equipment turns to active state, its HARQ-processes are simply activated by a single absolute grant instead of former three absolute grants.

The invention will be described in more detail.
- FIG 1: show HARQ processes for a 2ms TTI, according to the state of the art, already described in the introduction, and
- FIG 2: shows the assignment of user-groups to HARQ processes, as preferred embodiment of the inventive method.

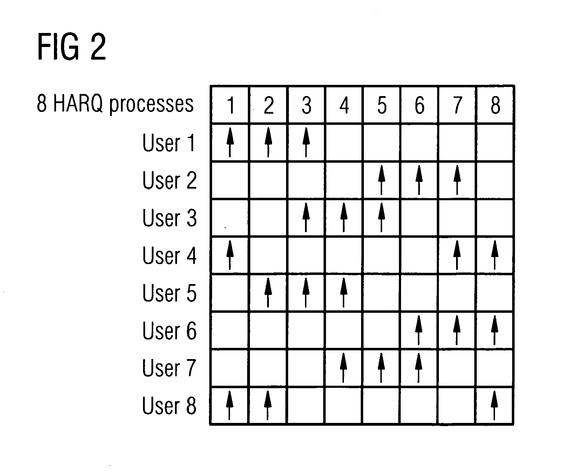

FIG 2 shows the assignment of user-groups to HARQ processes, according to the invention.

User equipments (not shown) are assigned to user-groups "user 1" to "user 8" in a cyclic way, until a best possible balance between the user-groups is found.

Each single user-group from "user 1" up to "user 8" corresponds to a set of HARQ processes.

In detail:
- user-group "user 1" corresponds to HARQ process no. 1, 2 and 3,
- user-group "user 2" corresponds to HARQ process no. 5, 6 and 7,
- user-group "user 3" corresponds to HARQ process no. 3, 4 and 5,
- user-group "user 4" corresponds to HARQ process no. 1, 7 and 8,
- user-group "user 5" corresponds to HARQ process no. 2, 3 and 4,
- user-group "user 6" corresponds to HARQ process no. 6, 7 and 8,
- user-group "user 7" corresponds to HARQ process no. 4, 5 and 6, while
- user-group "user 8" corresponds to HARQ process no. 1, 2 and 8.

As it can be seen, the HARQ processes are grouped and assigned to a specific user-group.

According to the invention a single absolute grant refers now to the HARQ processes of a whole specific HARQ group or HARQ setting.

A further example will be shown for user-group "user 1":

An absolute grant, referring to the HARQ process no. 1, refers now also to the HARQ process no. 2 and to the HARQ process no. 3 of the same HARQ setting.

So the HARQ setting of user-group 1 consist of the three HARQ processes no. 1, 2 and 3.

## Claims

1. Method for the transmission of IP frames between User-Equipments and a radio communication system, using HSUPA in scheduled mode with a TTI of 2ms for transmission,
- wherein HARQ-processes are used for IP transmission,
- wherein the HARQ-processes are grouped to form specific HARQ settings, each specific HARQ setting comprising more than one active HARQ-process,
- wherein HARQ-process allocation is configured by transmission of absolute grant commands,
- wherein a single absolute grant refers to all HARQ processes of one specific HARQ setting.

2. Method according to claim 1, wherein the IP frames are used as VoIP frames for a VoIP transmission.

3. Method according to claim 1, wherein the IP frames are used for gaming.

4. Method according to claim 1, wherein user-equipments are assigned to a number of user-groups in a cyclic way, to achieve a balance between the amounts of users per user-group.

5. Method according to claim 4, wherein each user-group corresponds to one dedicated HARQ setting.

6. Method according to claim 1, wherein a deactivation message for any HARQ process of a specific HARQ setting deactivates all HARQ-processes of the specific HARQ setting.

7. Method according to claim 1, wherein an activation message for a first HARQ process activates all HARQ-processes of a specific HARQ setting.

8. Method according to claim 7, wherein the first HARQ process relates to a reference HARQ process in the specific HARQ setting.

9. Method according to claim 7, wherein the activation message is interpreted as an update of an existing HARQ-configuration, deactivating all HARQ processes of the current HARQ setting.

10. Method according to claim 1, wherein the allocation of HARQ processes to a specific HARQ-setting is controlled by a RNC of the radio communication system.

11. Method according to claim 6 or 7, wherein the activation or deactivation of HARQ processes via absolute grant commands is controlled by a NodeB of the radio communication system.

12. Method according to one of the preceding claims, wherein the allocation of user-equipments to dedicated user-groups and the signaling of absolute grant commands is controlled by the NodeB.

13. Method according to one of the preceding claims, wherein the RNC configures the arrangement of HARQ-processes in groups.

14. Method according to one of the preceding claims, wherein the NodeB is able to shift HARQ processes in order to change the assignment of a specific HARQ setting with a single absolute grant command.

15. Method according to one of the preceding claims, wherein HARQ-processes for a specific user equipment, which becomes inactive, are deactivated by a single absolute grant command.

16. Method according to claim 15, wherein user equipments will be reassigned to restore a balanced noise rise over thermal in case that the specific user equipment becomes inactive.

17. Method according to one of the preceding claims, wherein HARQ-processes for a specific user-equipment are activated by one absolute grant command, whenever it turns to active state.
